(19) Europäisches Patentamt
European Patent Office
Office européen des brevets

(11) **EP 4 530 053 A1**

(12) **EUROPEAN PATENT APPLICATION**

(43) Date of publication:
**02.04.2025   Bulletin 2025/14**

(21) Application number: **23306614.1**

(22) Date of filing: **27.09.2023**

(51) International Patent Classification (IPC):
***B29D 11/00*** *(2006.01)*

(52) Cooperative Patent Classification (CPC):
**B29D 11/0073; B29D 11/00009; B29D 11/00317;
B29D 11/00788;** B29K 2105/041

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Essilor International
94220 Charenton-Le-Pont (FR)**

(72) Inventor: **BALASUBRAMANIAN, Srinivasan
Westford, MA 01886 (US)**

(74) Representative: **Plasseraud IP
104 Rue de Richelieu
CS92104
75080 Paris Cedex 02 (FR)**

(54) **OPTICAL ELEMENT COMPRISING A MICROCELLULAR FOAM FILM**

(57)    The present invention relates to a process of preparation of an optical element comprising a microcellular foam film, said optical element and its use for preparing an optical lens which can be used for controlling myopia progression.

EP 4 530 053 A1

**Description**

FIELD OF THE INVENTION

The present disclosure relates to a novel optical element comprising a microcellular foam film, its process of preparation and its use for preparing an optical lens useful for controlling myopia progression.

BACKGROUND

Slowing down myopia progression by peripheral defocus with lenses that refract light to specific area of the retina or by contrast reduction by diffusing light are well-known concepts. Thus, one of the types of myopia progression mitigation technologies involves the use of microstructures that scatter light where contrast reduction in the retina is achieved by diffusing the light in an ophthalmic lens at selected areas while maintaining visual acuity.

Diffusion of light rays relies on random scattering and is currently achieved using laser engraving on the surface of a lens. However, the step of laser engraving of each lens to generate the diffusion effect is time consuming and the engravings on the surface of the lens tend to attract and retain dust and other contaminants.

This type of process is therefore slow and leads to cosmetic issues due to the potential for trapping contaminants in the engraved part.

There is thus a need to develop a more efficient process which can be implemented in mass production while also eliminating the contamination issue due to the laser engraving.

It is to the inventors' credit that they have developed a process that solves these problems.

SUMMARY

The present disclosure is directed to a process of preparation of an optical element comprising a microcellular foam film, said process comprising the steps of:

a. mixing an optical quality polymer resin P1 with an additive selected from a chemical blowing agent, a physical blowing agent and a $CO_2$-philic additive;

b. extruding the mixture obtained from step a) to obtain an extrudate;

c. shaping into an extruded film the extrudate obtained from step b) to obtain a microcellular foam film in the case where said additive is selected from a chemical blowing agent and a physical blowing agent, or
shaping into an extruded film the extrudate obtained from step b) and further exposing the obtained extruded film to carbon dioxide to obtain a microcellular foam film in the case where said additive is a $CO_2$-philic additive;

d. combining the microcellular foam film obtained from step c) with at least one optical polymer P2 layer, thereby obtaining an optical element.

The present disclosure thus allows to obtain an optical element comprising a light diffusing film through the generation of diffusive regions in the form of microcellular foam structures within the bulk of the film, which prevents from contamination issues. This process is simple and efficient, and as such can be implemented in mass production.

The optical element obtained from this process can subsequently be incorporated into an ophthalmic lens and be used as a myopia progression control product.

Another object of the present disclosure is thus the optical element obtainable by the disclosed process.

The present disclosure is also directed to the use of said optical element for preparing an optical lens.

Another object of the present disclosure is a process of preparation of an optical lens comprising the steps of:

a. thermoforming an optical element according to the disclosure to obtain a thermoformed optical element;
b. combining the thermoformed optical element obtained from step a) with an optical material P3 to obtain a lens.

The present disclosure is also directed to an optical lens comprising an optical element as above-described, as well as the use of said optical lens for controlling myopia progression.

DETAILED DESCRIPTION

*Process of preparation of an optical element comprising a microcellular foam film*

A first object of the invention is a process of preparation of an optical element comprising a microcellular foam film, said process comprising the steps of:

a. mixing an optical polymer resin P1 with an additive selected from a chemical blowing agent, a physical blowing agent and a $CO_2$-philic additive;

b. extruding the mixture obtained from step a) to obtain an extrudate;

c. shaping into an extruded film the extrudate obtained from step b) to obtain a microcellular foam film in the case where said additive is selected from a chemical blowing agent and a physical blowing agent, or
shaping into an extruded film the extrudate obtained from step b) and further exposing the obtained extruded film to carbon dioxide in the case where said additive is a $CO_2$-philic additive to obtain a microcellular foam film;

d. combining the microcellular foam film obtained from step c) with at least one optical polymer P2 layer, thereby obtaining an optical element.

In the context of the invention, a microcellular foam film must be understood as a film containing pores with a diameter of less than 100 $\mu$m.

In the context of the invention, pores must be understood as cells having a spheric or aspheric shape.

The microcellular foam film prepared according to the process of the invention contains preferentially pores having a diameter of less than 100 $\mu$m, more preferentially of 1 to 25 $\mu$m, even more preferentially of 5 to 15 $\mu$m. In case where pores have an aspheric shape, typically a shape which is larger in one dimension than it is in the other dimensions, then the diameter as above-defined corresponds to the biggest dimension.

The pores diameter can typically be measured by SEM (Scanning Electron Microscopy) of cross-sections. The following protocol (cited in the article Effect of organic co-blowing agents on the morphology of CO2 blown microcellular polystyrene foams, The Journal of Supercritical Fluids 2017, 130, 30-39) can for example be used: The foam film sample was cooled in liquid nitrogen, then cut with a scalpel and placed on a holder so that the cross-section was visible. Further, the sample was coated with gold using sputtering to increase the conduction, which was necessary for the subsequent Scanning Electron Microscopy (SEM) analysis (by VEGA3 instrument from TESCAN company). The images underwent an image analysis processing using a software (NIS Elements) during which the cell size distribution (CSD) and porosities were determined.

The microcellular foam film prepared according to the process of the invention has preferentially a pores density of $10^5$ to $10^{10}$ pores per $cm^3$, more preferentially of $10^6$ to $10^8$ pores per $cm^3$.

This pores density is typically measured by capturing a microscopic image of the foam film of a known area and using it to calculate the density of pores.

The following protocol (cited in the article A process for Making Microcellular Thermoplastic Parts, Polymer Engineering and Science 1990, 30, 20, 1323-1329) can for example be used: First a micrograph showing 100 to 200 bubbles was obtained and the exact number of bubbles n in the micrograph was determined. Now if A is the area of the micrograph in $cm^2$ and $M$ is the magnification factor, then $(n/(A/M^2))$ gives the area bubble density, or the number of bubbles per $cm^2$ of the foam. Assuming an isotropic bubble distribution, the square root of the area density gives a line-density, or the number of bubbles per cm in the foam. By cubing the line density, the number of bubbles $N_J$ per $cm^3$ of the foam can be estimated as:

$$N_J = ( n\, M^2 / A )^{3/2}$$

where

$N_J$ = number of bubbles per $cm^3$ of foam,

N = number of bubbles in the micrograph,

A = area of the micrograph, $cm^2$

$M$ = magnification factor of the micrograph.

The microcellular film prepared according to the process of the invention can be characterized by its optical properties. In particular, its transmission, haze and clarity properties can be characterized using a Haze Gard under the standards ASTM D 1003 (Standard Test Method for Haze and Luminous Transmittance of Transparent Plastics) and ASTM D 1044 (Standard Test Method for Resistance of Transparent Plastics to Surface Abrasion).

A Haze Gard is a stationary instrument designed to measure the appearance of glass and of films, packaging and parts made of plastic and other transparent materials. The specimen surface is illuminated perpendicularly, and the transmitted light is measured photoelectrically, using an integrating sphere (0°/diffuse geometry). The spectral sensitivity conforms to CIE standard spectral value function y, under standard light C resp. A. Three parameters: total transmittance, haze, and clarity permit visual appearance to be characterized fully and objectively.

The microcellular film prepared according to the process of the invention can typically have a transmission of 85 to 95 %, preferentially of 87 to 92 %.

The microcellular film prepared according to the process of the invention can typically have a haze of 13 to 22 %, preferentially of 15 to 20 %.

The microcellular film prepared according to the process of the invention can typically have a clarity of 93 to 98 %, preferentially of 95 to 98 %.

_Step a)_

As used herein, the term "optical polymer resin" or "optical quality polymer resin" means a polymer adapted for an optical use, notably a polymer that is optically transparent. Optical polymer resins are notably thermoplastic or thermoset polymers, in particular thermoplastic polymers.

The majority of thermoplastic polymers that can be formed into a film or that can be blown, i.e., foamed, and that are optically transparent can be employed in the practice of the invention including, without limitation, thermoplastic polyolefins, polycarbonates, aromatic and aliphatic polyesters, polyurethanes, polyamides and various mixtures thereof materials. These and other polymers can be used either as an expandable polymer composition (P1), or a film forming composition (P2), or the same polymeric material can be used for each purpose, e.g. polycarbonate can be used both as an expandable polymer and as a polymer that forms films in the same composite structure of multilayer foam film.

In a preferred embodiment, the optical polymer resin P1 used in step a) of the process according to the invention, as an expandable polymer, is a thermoplastic polymer, in particular selected from polycarbonate, poly(methyl methacrylate), polyurethane, polyethylene terephthalate, polyvinylchloride, cyclic olefin polymer, cyclic olefin copolymer, nylon.

Such microcellular foam film can typically be obtained by the use of an additive, such as a chemical blowing agent, a physical blowing agent or a $CO_2$-philic additive, which is mixed with the optical polymer resin P1. When exposed to specific temperature conditions or to $CO_2$, the additive will decompose, then generating gas bubbles, which will create pores within the film.

In the context of the invention, a blowing agent is a substance which is capable of producing a cellular structure in a material via a foaming process. In particular, during the melt extrusion process the blowing agents decompose generating gaseous by-products (nitrogen or carbon dioxide) that expand as the melt exits the die and are entrapped in the film, thus creating pores.

According to a preferred embodiment, the chemical blowing agent used in the process according to the invention can be selected from azodicarbonamide, sodium bicarbonate, or a chemical foaming agent such as Foamazol™, for example Foamazol™ 41, 42, 50, 57, 61, 72, or 1003.

According to a particular embodiment, in step a) of the process of the invention, the weight ratio of chemical blowing agent (CBA) to optical polymer resin P1 can be of 0.5 to 5 %, preferentially of 1 to 4 %, more preferentially of 2 %.

According to a preferred embodiment, the physical blowing agent (PBA) used in the process according to the invention can be selected from carbon dioxide ($CO_2$), nitrogen, pentane, butane, or fluorocarbon compounds.

In case where a physical blowing agent is used as additive, the process of the invention can comprise a step of mixing a part of the starting optical polymer resin P1 with said physical blowing agent. The starting optical polymer resin P1 can be in a molten state during step a). If the physical blowing agent is a gas, then the mixing step can be carried out by saturating the starting optical polymer resin P1 with said PBA at high pressure (above 3MPa, for example at 4 MPa), resulting in an optical polymer resin saturated with the gas. Then, said saturated optical polymer resin is mixed with the corresponding virgin optical polymer resin P1 (same polymer resin which has not been saturated with the PBA) prior to the extruding step b). By adjusting the ratio of PBA-saturated optical polymer resin / virgin optical polymer resin, the concentration of PBA in the starting resin P1 can be determined and tuned to obtain different results in terms of number, size, shape and distribution of pores formed within the film.

According to a particular embodiment, the weight ratio of PBA-saturated optical polymer resin / virgin optical polymer resin can be of 5 to 15 %, preferentially of 10%.

In the context of the invention, a $CO_2$-philic additive is a material which has a high affinity for $CO_2$, allowing to increase the solubility of $CO_2$ in the optical polymer resin and thus enabling a higher adsorption of $CO_2$ in the optical polymer resin compared to what would occur without the addition of the $CO_2$-philic additive. By controlling the concentration of the $CO_2$-philic additives, the size and distribution of the resulting pores can be controlled.

According to a preferred embodiment, the $CO_2$-philic additive used in the process according to the invention can be selected from zinc stearate, polydimethoxy silane (PDMS), surfactants, such as sodium dioctylsulfosuccinate (Aerosol-OT™), fluorosurfactants, or fluorinated polymers, such as perfluoropolyethers or polystyrene-block-(1,1,2,2-tetrahydroperfluorodecyl acrylate) block copolymer.

According to a particular embodiment, in step a) of the process of the invention, the weight ratio of $CO_2$-philic additive to optical polymer resin P1 can be of 0.1 to 1 %, preferentially of 0.2 to 0.9 %.

In the context of the invention, a surfactant (also called surface active agent) is a substance that modifies the surface tension between two surfaces. It can, in particular, reduce the surface tension of a liquid in which it is dissolved, thereby increasing its spreading and wetting properties.

*Step b)*

Extruding step b) of the process of the invention is generally carried out under heating. Therefore, the mixture obtained from step a) can be in a molten state.

According to a preferred embodiment, the extrusion step b) of the process of the invention can be carried out at a temperature of 150°C to 300°C, preferably of 230°C to 290°C, more preferably of 240°C to 280°C.

*Step c)*

According to a preferred embodiment, step c) of the process of the invention can be carried out by casting or calendering. This casting step c) can be carried out on rolls, notably on cooling rolls, which can be maintained at a temperature of 100 to 140 °C, preferentially of around 120°C. Such rolls can typically be highly polished chrome plated chill rolls.

The extrudate can alternatively be shaped into an extruded film by passing through a flat die (also called film extrusion die) placed at the extruder outlet.

According to a preferred embodiment, the process of the invention is carried out with a single screw film extruder fitted with a film extrusion die. The temperature can be adjusted through the various zones in the extruder so that the decomposition rate of the blowing agent and the pores size are controlled in the extruded film.

In the context of the invention, the extruded film obtained after step c) of the process of the invention can have a thickness of 100 to 400 $\mu$m, preferentially of 200 to 300 $\mu$m.

In the case where the process of the invention involves a $CO_2$-philic additive as additive, said process comprises the exposure of the obtained extruded film to carbon dioxide at high pressure and elevated temperature in a chamber capable of withstanding high pressure. Under these conditions, the film gets saturated with $CO_2$ and upon decompression the gas molecules expand, thereby creating pores within the film.

For this step, the applied pressure can typically be of 5 to 50 MPa, preferentially of 10 to 30 MPa, and the applied temperature can typically be of 20 to 60 °C, preferentially of 25 to 40 °C. The exposure of the film to a high pressure carbon dioxide can typically be carried out for 30 to 120 minutes, preferably for 45 to 90 minutes, more preferably for 60 minutes. Then, the pressure can be subsequently rapidly released by venting the chamber, thus allowing the gas molecules to expand causing the generation of pores within the film.

*Step d)*

In order to obtain an optical element, the process of the invention comprises a step of combination of the microcellular foam film obtained from step c) with at least one optical polymer layer P2.

According to a preferred embodiment, during step d) of the process of the invention the microcellular foam film can be combined with at least one optical quality thermoset or thermoplastic polymer layer P2, notably a thermoplastic polymer layer, in order to obtain an optical element.

In the context of the invention, said optical polymer layer P2, can be a thermoplastic polymer selected from polycarbonate, poly(methyl methacrylate), polyurethane, polyethylene terephthalate, polyvinylchloride, cyclic olefin polymer, cyclic olefin copolymer, nylon, in particular a polycarbonate film.

In the context of the invention, said optical polymer P2 layer can have a thickness of 25 to 200 $\mu$m, preferentially of 50 to 150 $\mu$m, more preferentially of 100 $\mu$m.

According to a preferred embodiment, step c) and d) are performed concomitantly by casting the extruded film of step c) onto at least one optical polymer layer P2, notably an optical polymer P2 film. In this case, a bilayer film is obtained, said bilayer film being composed of a layer of polymer P1 with optical diffusion property (the microcellular foam film) and an optically clear layer of polymer P2 (the carrier film).

The obtained bilayer film can be further combined on the foam film side with one additional optical quality polymer layer P2', P2 and P2' being either the same polymer or different ones, notably by lamination.

Even if pores are formed at the surface of the microcellular foam film during its preparation process, this step d) of combination of the film with at least one other layer allows to ensure that all the pores formed in the film are located within the bulk of the optical element and notably not at the outer or convex surface of the subsequent optical lens, that is the surface intended to be in contact with the outside, which could create the same drawbacks as those observed in the engraved lens (attraction of dust and other contaminants).

According to another particular embodiment, during step d) of the process of the invention, the microcellular foam film can be sandwiched between two optical quality thermoset or thermoplastic polymer layers P2 and P2', notably thermoplastic polymer layers, in particular polycarbonate films in order to obtain an optical element. As above-described, P2 and P2' can be either the same polymer or different ones.

According to a preferred embodiment, step d) of the process of the invention can comprise a step of lamination of the microcellular foam film with at least one optical quality polymer layer P2, optionally by using an optically clear adhesive.

In the context of the invention, said optically clear adhesives can be pressure-sensitive adhesives, thermal and/or UV curable type adhesives. Suitable adhesives are typically of acrylic type. Examples of suitable additives are sold under the brand names 8171CL® from 3MTM, ARcare® 92524 from Adhesives Research, Dymax 3069®.

In another particular embodiment, steps b), c) and d) can be performed concomitantly. In that context, in step b) of the process of the invention, the mixture obtained from step a) can be coextruded with at least one optical thermoplastic resin P2. In this particular case, a coextruded multi-layer film can be obtained, with one of the layers being a microcellular foam film. Such a coextrusion process consists in a simultaneous extrusion of at least two thermoplastic resins P1 and P2.

In the context of the process of the invention, the at least one thermoplastic resin P2 which can be coextruded with the mixture obtained from step a), can be selected from polycarbonate, poly(methylmethacrylate), polyurethane, polyethylene terephthalate, polyvinylchloride, cyclic olefin polymer, cyclic olefin copolymer, nylon.

*Optical element obtainable by the process according to the invention*

Another object of the invention is an optical element obtainable by the process according to the invention.

The optical element of the invention typically comprises a bilayer P1 (foam) / P2 (film) or a trilayer structure P2 (film) /P1 (foam) /P2' (film). Each layer is generally in direct contact with the adjacent layer, optionally through an adhesive.

Said optical element can be used for example for the preparation of optical lens.

Another object of the invention is an optical element obtainable by the process according to the invention, comprising three layers, the first one being a polymer layer P2, the second one being a microcellular foam film P1, and the third one being a polymer layer P2'.

According to a particular embodiment, in said optical element, at least one of the polymer layers P1, P2 or P2' is made of polycarbonate.

According to a particular embodiment, in said optical element, P1, P2 and P2' are all made of polycarbonate.

*Use of an optical element of the invention for preparing an optical lens*

Another object of the invention is thus the use of an optical element according to the invention, for preparing an optical lens.

Another object of the invention is a process of preparation of an optical lens comprising the steps of:

a. thermoforming an optical element obtained from the process according to the invention to obtain a thermoformed optical element; and optionally

b. combining the thermoformed optical element obtained from step b) with an optical material P3 to obtain a lens.

Said thermoforming step a) can typically be preceded by a step where the optical element is shaped into a desired form, for example a form of a circular disc. Such shaping step can typically be carried out by cutting the optical element into a circular disc.

The thermoforming process typically consists in a first step where the optical element is heated. This heating step can typically be carried out at a temperature of 100 to 150°C, preferentially of 110°C to 130°C, more preferentially at 120°C, for 2 to 10 minutes, preferentially for 5 minutes.

After this first heating step, the pre-heated optical element can typically be placed in a bending machine over a concave former at a temperature of 120 to 170°C, preferentially of 130°C to 150°C, more preferentially at 140°C. Then vacuum is applied through the former, which can typically have a small hole in its center, and the preheated optical element takes the shape of the former. The optical element can be held on the former at the same temperature for 5 to 20 minutes, preferentially 10 minutes and subsequently the vacuum is released to remove the thermoformed optical element. The thermoformed optical element obtained in step a) has typically a convex and a concave side.

In step b), the thermoformed optical element is combined with an optical material P3 to form a lens. P3 may be applied to the concave side, the convex side or on both sides.

In a particular embodiment, step b) of the process of preparation of an optical lens according to the invention can be carried out by injection-molding. Then, an optical material P3, as above defined, can be injected on the thermoformed optical element placed in a mold, to obtain a lens. In a preferred embodiment, step b) of the process of preparation of an optical lens according to the invention can be carried out by injection overmolding. In this case, the thermoformed optical element is first placed in a mold, then an optical material P3, as above defined, is injected in a molten state, in the mold onto at least one surface of the thermoformed optical element, notably the concave surface, to obtain a lens.

According to a preferred embodiment, the optical material P3 used in the process of preparation of an optical lens in combination with an optical element is a thermoplastic or thermoset polymer. It can be selected from polycarbonate, poly(methylmethacrylate), polyurethane, polyethylene terephthalate, polyvinylchloride, cyclic olefin polymer, cyclic olefin copolymer, nylon.

In case where a thermoset polymer is used, the thermoformed optical element is first placed in a mold, then the monomer is injected into the cavity of the mold so that there is monomer on either side of the optical element, and then the monomer polymerizes to form a lens. Such monomer can be selected from an allyl carbonate (CR39 monomer), an isocyanate/thiol mixture (to form a thiourethane lens). A catalyst can typically be used to initiate the polymerization of the monomer. In the case of a thiourethane lens formed from an isocyanate/thiol mixture, dibutyltin dichloride can be used as catalyst. In the case of an allyl carbonate monomer, an example of the catalyst that can be used is diisopropyl peroxydicarbonate

According to a particular embodiment, the layer composed of the optical material P3 and formed during step b) of the process of preparation of an optical lens according to the invention, preferentially has a thickness of 2 to 15 mm, more preferentially of 7 to 14 mm.

According to a particular embodiment, the process of preparation of an optical lens according to the invention can result in a multilayer optical lens with a structure, preferentially from the convex side to the concave side, P3 (layer) / P1 (foam film) / P2 (film) or P2 (film) / P1 (foam film) / P3 (layer) or P1 (foam film) / P2 (film) / P3 (layer) or P3 (layer) / P2 (film) / P1 (foam film) / P2' (film) or P2 (film) / P1 (foam film) /P2' (film) / P3 (layer), or P3 (layer) / P1 (foam film) / P2 (film) / P3 (layer), or P3 (layer) / P1 (foam film) / P2 (film) / P3 (layer) or P3 (layer) / P2 (film) / P1 (foam film) / P2' (film) / P3 (layer), or P3 (layer) / P2 (film) / P1 (foam film) / P3 (layer).

*Optical lens comprising an optical element according to the invention*

Another object of the invention is an optical lens comprising an optical element according to the invention.

Said optical lens according to the invention can comprise a multilayer structure, preferentially from the convex side to the concave side, P3 (layer) / P1 (foam film) / P2 (film) or P2 (film) / P1 (foam film) / P3 (layer) or P1 (foam film) / P2 (film) / P3 (layer) or P3 (layer) / P2 (film) / P1 (foam film) / P2' (film) or P2 (film) / P1 (foam film) /P2' (film) / P3 (layer), or P3 (layer) / P1 (foam film) / P2 (film) / P3 (layer), or P3 (layer) / P1 (foam film) / P2 (film) / P3 (layer) or P3 (layer) / P2 (film) / P1 (foam film) / P2' (film) / P3 (layer), or P3 (layer) / P2 (film) / P1 (foam film) / P3 (layer).

*Use of an optical lens according to the invention for controlling myopia progression*

Another object of the invention is the use of an optical lens according to the invention for controlling myopia progression, notably by inducing a contrast reduction in the retina.

EXAMPLES

Materials and Methods

Sabic Lexan® OQ3820 polycarbonate resin pellets were used as polycarbonate resin.

Sabic Lexan® OQ3820 film was used as a polycarbonate film.

Foamazol 1003 (Bergen International, decomposition temperature >204°C) was used as a chemical blowing agent.

A LEMA machine was used as a bending machine

Pores diameters were measured by SEM (Scanning Electron Microscopy) of cross-sections A Haze Gard (under the standards ASTM D 1003 and ASTM D 1044) was used to characterize the optical properties of the films.

Example 1: Process of preparation of an optical element according to the disclosure involving a physical blowing agent

Sabic Lexan® OQ3820 polycarbonate resin pellets were saturated with $CO_2$ at high pressure (4 MPa). The $CO_2$ saturated pellets were blended with virgin OQ3820 resin pellets in a ratio of 1:9 (10%) and extruded using a single screw film extruder through a film extrusion die. The melt temperature and the extrusion die temperature were maintained at 250°C.

The extruded melt was cast on to highly polished chrome plated chill rolls maintained at a temperature of around 120°C. The extruded film thickness was maintained at 300 microns. Due to the high barrel temperature a large number of tiny $CO_2$ gas bubbles are nucleated within the barrel which are contained within the melt due to the high pressure.

Upon exiting the extrusion die, bubbles expand as the film cools and are trapped within the film.

Pores diameter of around 10 microns was obtained under these conditions.

The optical properties of the film thus obtained were characterized using a Haze Gard and found to be as follows - Transmission: 92%, Haze: 15%, Clarity: 97%.

The obtained microcellular foam film was laminated between two 100 microns thick clear, Lexan® 8010 PC films using 8171CL from 3MTM as optically clear adhesive.

Example 2: Process of preparation of an optical element according to the disclosure involving a physical blowing agent and a carrier film

Sabic Lexan® OQ3820 polycarbonate resin pellets were saturated with $CO_2$ at high pressure (4 MPa). The $CO_2$ saturated pellets were blended with virgin OQ3820 resin pellets in a ratio of 1:9 (10%) and extruded using a single screw film extruder through a film extrusion die. The melt temperature and the extrusion die temperature were maintained at 250°C.

The extruded melt was cast on to a 100 micron thick clear, optical quality polycarbonate (PC) film (Sabic Lexan® OQ3820 film). The extruded film thickness was maintained at 200 microns. Due to the high barrel temperature a large number of tiny $CO_2$ gas bubbles are nucleated within the barrel which are contained within the melt due to the high pressure.

Upon exiting the extrusion die, bubbles expand as the film cools and are trapped within the film.

Pores diameter of around 10 microns was obtained under these conditions.

The optical properties of the film thus obtained were characterized using a Haze Gard and found to be as follows - Transmission: 89%, Haze: 16%, Clarity: 98%.

The obtained microcellular foam film was laminated on the foam film side with a 100 microns thick clear, Lexan® 8010 PC films using 8171CL from 3MTM as optically clear adhesive.

Example 3: Process of preparation of an optical element according to the disclosure involving a chemical blowing agent

Sabic Lexan® OQ3820 polycarbonate resin tumbled with the chemical foaming agent Foamazol 1003 (Bergen International, decomposition temperature >204°C, at a weight percent of 2%) was fed into the hopper of a single screw film extruder. The barrel and the extrusion die were maintained at a temperature of 265°C.

The extruded melt was cast on to highly polished chrome plated chill rolls maintained at a temperature of around 120°C. The extruded film thickness was maintained at 300 microns. Due to the high barrel temperature the chemical foaming agent decomposes liberating gas bubbles that are contained within the melt due to the high pressure.

Upon exiting the extrusion die, bubbles expand as the film cools and are trapped within the film.

Pores diameter of around 15 microns was obtained under these conditions. The optical properties of the film thus obtained were characterized using a Haze Gard and found to be as follows - Transmission: 90%, Haze: 18%, Clarity: 95%.

The obtained microcellular foam film was laminated between two 100 microns thick clear, Lexan® 8010 PC films using 8171CL from 3MTM as optically clear adhesive.

Example 4: Process of preparation of an optical element according to the disclosure involving a chemical blowing agent and a carrier film

Sabic Lexan® OQ3820 polycarbonate resin tumbled with the chemical foaming agent Foamazol 1003 (Bergen International, decomposition temperature >204°C, at a weight percent of 2%) was fed into the hopper of a single screw film extruder. The barrel and the extrusion die were maintained at a temperature of 265°C.

The extruded melt was cast on to a 100 microns thick clear, optical quality PC film (Sabic Lexan® OQ3820 film). The extruded film thickness was maintained at 200 microns. Due to the high barrel temperature the chemical foaming agent decomposes liberating gas bubbles that are contained within the melt due to the high pressure.

Upon exiting the extrusion die the bubbles expand as the film cools and are trapped within the film.

Pores diameter of around 15 microns was obtained under these conditions.

The optical properties of the film thus obtained were characterized using a Haze Gard and found to be as follows - Transmission: 87%, Haze: 18%, Clarity: 96%.

The obtained microcellular foam film was laminated on the foam film side with a 100 microns thick clear, Lexan® 8010 PC films using 8171CL from 3MTM as optically clear adhesive.

Example 5: Process of preparation of an optical element according to the disclosure involving $CO_2$ exposure

A microcellular foam film prepared according to steps a to c of the process of the invention from a polycarbonate (PC) resin and a $CO_2$-philic additive, is placed in a chamber capable of withstanding high pressure. $CO_2$ gas is pressurized and feed into the chamber where the pressure is maintained at 20 MPa for 1 hour. The pressure is subsequently rapidly released by venting the chamber.

Upon rapid release in the pressure, the gas molecules expand causing the generation of foam within the PC film.

The obtained microcellular foam film was laminated between two 100 microns thick clear, Lexan® 8010 PC films using 8171CL from 3MTM as optically clear adhesive.

Example 6: Process of preparation of an optical lens according to the disclosure

An optical element obtained according to the process of the invention was cut into circular discs of 76 mm in diameter. The discs were preheated in an oven at 120°C for 5 minutes before being placed in a LEMA machine over a 3.25 base concave former with a small hole in the center. Vacuum was applied through the former and the preheated discs formed to the shape of the formers. The former temperature was maintained at 140°C. The laminates were held on the former at this temperature for 10 minutes and subsequently the vacuum was released to remove the formed wafers (thermoformed optical element).

The formed wafer was then placed in a SF mold cavity with the wafer on the concave insert side and injection overmolded with Lexan® OQ3820 PC (polycarbonate). The melt and mold temperatures for the injection overmolding process were set at 270°C and 110°C, respectively resulting in a semi-finished (SF) lens.

**Claims**

1. A process of preparation of an optical element comprising a microcellular foam film, said process comprising the steps of:

   a. mixing an optical polymer resin P1 with an additive selected from a chemical blowing agent, a physical blowing agent and a $CO_2$-philic additive;
   b. extruding the mixture obtained from step a) to obtain an extrudate;
   c. shaping into an extruded film the extrudate obtained from step b) to obtain a microcellular foam film in the case where said additive is selected from a chemical blowing agent and a physical blowing agent, or shaping into an extruded film the extrudate obtained from step b) and further exposing the obtained extruded film to carbon dioxide to obtain a microcellular foam film in the case where said additive is a $CO_2$-philic additive;

d. combining the microcellular foam film obtained from step c) with at least one optical polymer layer P2, thereby obtaining an optical element.

2. The process according to claim 1, wherein the optical polymer resin P1 is a thermoplastic polymer, in particular selected from polycarbonate, poly(methyl methacrylate), polyurethane, polyethylene terephthalate, polyvinyl chloride, cyclic olefin polymer, cyclic olefin copolymer, nylon.

3. The process according to claim 1 or 2, wherein the extruding step b) is carried out at a temperature of 150°C to 300°C, preferably of 230°C to 290°C, more preferably of 240°C to 280°C.

4. The process according to any of claims 1 to 3, wherein the shaping step c) is carried out by casting or calendering.

5. The process according to any of claims 1 to 4, wherein step c) and d) are performed concomitantly by casting the extruded film of step c) onto at least one optical polymer layer P2, notably a film.

6. The process of any of claims 1 to 5, wherein in step d) the microcellular foam film is combined with at least one optical quality thermoset or thermoplastic polymer layer P2, notably a thermoplastic polymer layer, in particular a polycarbonate film.

7. The process of any of claim 1 to 5, wherein in step d) the microcellular film is sandwiched between two optical quality thermoset or thermoplastic polymer layers P2 and P2', notably thermoplastic polymer layers, in particular polycarbonate films.

8. The process of any of claims 1 to 5, wherein step d) comprises a step of lamination of the microcellular foam film with at least one optical quality polymer layer P2, optionally by using an optically clear adhesive.

9. The process according to any one of claims 1 to 8, wherein in step b) the mixture obtained from step a) is coextruded with at least one optical thermoplastic resin P2.

10. An optical element obtainable by the process according to any one of claims 1 to 9.

11. A use of an optical element according to claim 10, for preparing an optical lens.

12. A process of preparation of an optical lens comprising the steps of:

a. thermoforming an optical element obtained from the process according to any one of claims 1 to 9 to obtain a thermoformed optical element;

b. combining the thermoformed optical element obtained from step a) with an optical material P3 to obtain a lens.

13. The process according to claim 12, wherein the step b) is carried out by injection-molding, notably by injection overmolding.

14. An optical lens comprising an optical element according to claim 10.

15. Use of an optical lens according to claim 14 for controlling myopia progression.

Europäisches
Patentamt

European
Patent Office

Office européen
des brevets

# EUROPEAN SEARCH REPORT

Application Number

EP 23 30 6614

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/322505 A1 (IKEDA HIDEYUKI [JP] ET AL) 30 October 2014 (2014-10-30) | 1-11,14 | INV. B29D11/00 |
| A | * abstract *<br>* figure 1 *<br>* paragraphs [0021] - [0034], [0039] - [0044], [0069] - [0082] * | 12,13,15 | |
| X | US 2019/111593 A1 (LI CHENGTAO [US]) 18 April 2019 (2019-04-18) | 1-10 | |
| A | * abstract *<br>* figures 1-5 *<br>* paragraphs [0046] - [0051], [0054] - [0074], [0113] - [0115] * | 11-15 | |
| X | CN 108 819 402 A (JIAXING LINGKE MATERIAL TECH CO LTD) 16 November 2018 (2018-11-16) | 1-10 | |
| A | * abstract *<br>* figure 1 *<br>* paragraphs [0025] - [0037] * | 11-15 | |

TECHNICAL FIELDS
SEARCHED      (IPC)

B29D
B32B

The present search report has been drawn up for all claims

| Place of search | Date of completion of the search | Examiner |
|---|---|---|
| The Hague | 13 March 2024 | Heckmann, Paul |

EPO FORM 1503 03.82 (P04C01)

## ANNEX TO THE EUROPEAN SEARCH REPORT
## ON EUROPEAN PATENT APPLICATION NO.

EP 23 30 6614

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2024

| Patent document cited in search report | | | Publication date | Patent family member(s) | | | Publication date |
|---|---|---|---|---|---|---|---|
| US 2014322505 | A1 | | 30-10-2014 | CN | 103827702 | A | 28-05-2014 |
| | | | | EP | 2884313 | A1 | 17-06-2015 |
| | | | | JP | 6026434 | B2 | 16-11-2016 |
| | | | | JP | WO2014024882 | A1 | 25-07-2016 |
| | | | | KR | 20140107176 | A | 04-09-2014 |
| | | | | TW | 201408475 | A | 01-03-2014 |
| | | | | US | 2014322505 | A1 | 30-10-2014 |
| | | | | WO | 2014024882 | A1 | 13-02-2014 |
| US 2019111593 | A1 | | 18-04-2019 | CA | 3020607 | A1 | 13-04-2019 |
| | | | | JP | 7049973 | B2 | 07-04-2022 |
| | | | | JP | 7342178 | B2 | 11-09-2023 |
| | | | | JP | 2019073693 | A | 16-05-2019 |
| | | | | JP | 2022087129 | A | 09-06-2022 |
| | | | | US | 2019111593 | A1 | 18-04-2019 |
| | | | | US | 2020361127 | A1 | 19-11-2020 |
| CN 108819402 | A | | 16-11-2018 | NONE | | | |

EPO FORM P0459

For more details about this annex : see Official Journal of the European Patent Office, No. 12/82

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Effect of organic co-blowing agents on the morphology of $CO_2$ blown microcellular polystyrene foams. *The Journal of Supercritical Fluids*, 2017, vol. 130, 30-39

- A process for Making Microcellular Thermoplastic Parts. *Polymer Engineering and Science*, 1990, vol. 30 (20), 1323-1329